# EUROPÄISCHE PATENTSCHRIFT

(11) **EP 1 459 425 B1**
(45) Veröffentlichungstag und Bekanntmachung des Hinweises auf die Patenterteilung: **07.07.2010**
(21) Anmeldenummer: 02738017.9
(22) Anmeldetag: 30.04.2002
(51) Int. Cl.: H02K 21/14

(54) **ELEKTRISCHE SYNCHRONMASCHINE MIT TOROIDALER WICKLUNG**
ELECTRIC SYNCHRONOUS MACHINE COMPRISING A TOROIDAL WINDING
MACHINE SYNCHRONE ELECTRIQUE A ENROULEMENT TOROIDAL

(30) Priorität: 30.04.2001 DE 10123135; 12.11.2001 DE 10155918
(43) Veröffentlichungstag der Anmeldung: 22.09.2004
(73) Patentinhaber: Schwericke, Florian Christoph, 12557 Berlin (DE)
(72) Erfinder: WEISSENSTEINER, Leopold, A-2100 Korneuburg (AT)
(74) Vertreter: Hengelhaupt, Jürgen
(86) Internationale Anmeldenummer: PCT/EP2002/004770
(87) Internationale Veröffentlichungsnummer: WO 2002/089291

(56) Entgegenhaltungen:
- WO-A-99/19962
- FR-A- 2 535 924
- US-A- 4 636 666
- US-A- 5 365 137
- PATENT ABSTRACTS OF JAPAN vol. 1997, no. 05, 30. Mai 1997 (1997-05-30) & JP 09 009532 A (HITACHI LTD), 10. Januar 1997 (1997-01-10)

## Beschreibung

Die Erfindung betrifft eine elektrische Maschine mit permanentmagnetischer Erregung, deren Stator aus einem Ringkern aus magnetisch leitfähigem Material besteht, der zwischen Abschnitten, die als magnetische Pole wirken, in gleichmäßiger Verteilung Pollücken und Wicklungsabschnitte mindestens einer Wicklung mit in Umfangsrichtung des Stators liegender Wicklungsachse aufweist. Die Maschine kann als Motor und/oder Generator eingesetzt werden und mit Gleich- oder Wechselstrom betrieben werden.

Elektrische Maschinen weisen üblicherweise einen Rotor mit mindestens einem Permanentmagneten oder einem elektrisch erregten Polpaar und einen Stator auf, wobei die Wicklungen auf Polschuhe gewickelt oder in Nuten eines Blechpakets eingelegt sind. Sind mehrere Permanentmagnete im Rotor vorgesehen, so haben diese eine entsprechend der Polzahl wechselnde magnetische Ausrichtung.

Der prinzipielle Aufbau derartiger Maschinen hat sich seit Jahrzehnten nicht geändert. Die Maschinen haben, je nach dem ob sie als Generator oder Motor laufen, einen begrenzten Wirkungsgrad bzw. ein begrenztes Drehmoment und ein begrenztes Leistungs/Masse-Verhältnis.

Es sind seit langem auch Maschinen der eingangs genannten Art mit einem Stator-Ringkern, das heißt toroidaler Bewicklung, bekannt, die bisher jedoch keinerlei Vorteile gegenüber herkömmlichen elektrischen Maschinen beweisen konnten. Vorschläge für Maschinen mit Stator-Toroidwicklung existieren seit Beginn der Elektromaschinenentwicklung in zahlreicher Form, siehe beispielsweise FR-A-2 535 924 oder WO 99/19 962 A.

Die Erfindung hat es sich zur Aufgabe gemacht, eine elektrische Maschine der eingangs genannten Art mit einer Toroidwicklung und einem gegenüber herkömmlichen Maschinen erhöhten Wirkungsgrad bzw. Drehmoment und einem deutlich verbesserten Leistungs/Masse-Verhältnis anzugeben.

Die Aufgabe wird erfindüngsgemäß gelöst durch die Merkmale des Anspruchs 1. Zweckmäßige Ausgestaltungen der Erfindung sind Gegenstand der Unteransprüche.

Danach entsprechen die Abstände zwischen das Erregerfeld erzeugenden, entgegengesetzt gepolten Pole der Permanentmagneten im wesentlichen der Größe der gegenüber liegenden Pollücken im Stator und die Ausrichtung der magnetischen Pole der Permanentmagnete (5) in Umfangsrichtung im Rotor ist abwechselnd Nord-Nord und Süd-Süd.

Der Stator weist in gleichmäßiger Verteilung Pollücken auf, die als in radialer Richtung mäanderförmig vorspringende Bereiche ausgebildet sein können, in die die Wicklungsabschnitte gewickelt sind.

In bevorzugter Weise ist die Statorwicklung eine Mehrfachwicklung, deren einzelne Wicklungen mit separaten Ausgängen betrieben oder parallel geschaltet sein können, wobei eine besonders zweckmäßige Variante eine geradzahlige Anzahl von Wicklungen aufweist. Die Wicklungen bestehen dann aus am Umfang des Stators abwechselnd folgenden, miteinander in Reihe geschalteten Wicklungsabschnitten, so dass entgegengesetzt gepolte Wicklungsabschnitte am Statorumfang verteilt sind.

In besonders bevorzugter Weise besteht die Mehrfachwicklung bei einer Statorwicklung aus zwei separat mit Verbrauchern beschalteten Wicklungen mit am Umfang des Stators abwechselnd folgenden, miteinander in Reihe geschalteten Wicklungsabschnitten.

Dabei spielt es keine Rolle, ob der Rotor trommel- oder scheibenförmig ausgebildet ist.

Z.B. können die Pollücken für eine Statorwicklung vom Innenumfang bzw. bei scheibenförmigem Rotor von der Innenseite des Stators ausgehen. Sie können auch von innen und außen ausgehen und Stege für die Wicklungsabschnitte zwischen den Statorpolen bilden, besitzen dann jedoch nur einen kleinen magnetischen Querschnitt gegenüber den Polbereichen. Besser ist es, den magnetischen Querschnitt gleich zu halten, indem der Statorring von vornherein eine mäanderförmige Gestaltung aufweist.

"Mäanderförmig vorspringend" bedeutet im vorliegenden Zusammenhang, dass die die Pollücken bildenden Bereiche einer Statorwicklung bei einer Maschine mit einem trommelförmigen Rotor in radialer Richtung und bei einer Maschine mit einem scheibenförmigen Rotor in axialer Richtung vom Luftspalt weg weisend zurückgesetzt sind.

Stator und Rotor bestehen, wenn sie bewickelt sind, entweder aus einem geeigneten magnetisch leitfähigen Material, z.B. Weicheisen oder Ferrit, oder sind wie allgemein üblich geblecht.

Die Maschine kann als Generator sowie als Motor eingesetzt werden.

Es sind im Rotor mehrere Permanentmagnete pro magnetischen Pol oder beispielsweise hufeisenförmige Permanentmagnete vorzusehen.

Eine vorteilhafte Anordnung für variable Leistungen ergibt sich, wenn mehrere derartig aufgebaute Maschinen mit einer Antriebs- bzw. Abtriebsachse gemeinsam betrieben werden, so dass sich gegebenenfalls nur die Wicklungen einzelner Statoren zuschalten lassen. Es kann auch eine mechanische Trennung vorgesehen sein, indem einzelne oder alle Statoren am Umfang oder den Stator durchgreifend an Schienen gelagert sind, so dass sie sich von ihren Rotoren abziehen lassen.

Die Erfindung soll nachstehend anhand eines Ausführungsbeispiels näher erläutert werden. In den zugehörigen Zeichnungen zeigen
- Fig. 1: eine erfindungsgemäße Elektromaschine im Querschnitt,
- Fig. 2: eine Variante der Machine mit einem speziellen Blechschnitt,
- Fig. 3: die Draufsicht auf einen Stator einer Maschine mit scheibenförmigem Rotor und

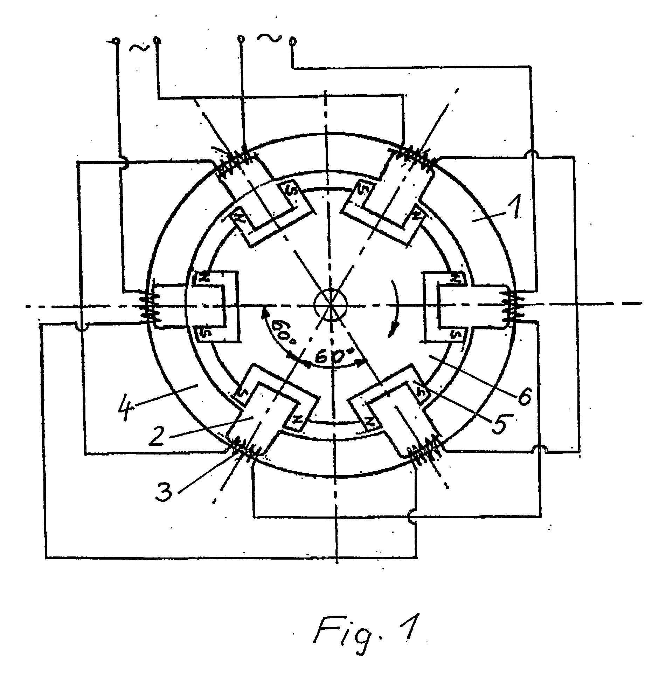

Fig. 1 zeigt schematisch den Querschnitt eines Generators nach der Erfindung. Der Stator besteht aus einem Statorring 1, der wie üblich geblecht ist. In gleichmäßigen Abständen am Umfang des Statorrings 1 sind Ausnehmungen (Pollücken 2) vorhanden, in die Wicklungsabschnitte 3 von zwei Wicklungen gewickelt sind. Die Wicklungsabschnitte 3 sind so geschaltet, dass sich am Umfang des Statorrings 1 jeweils Wicklungsabschnitte 3 jeder Wicklung abwechseln und jeweils drei Wicklungsabschnitte 3 zu einer Wicklung in Reihe geschaltet sind. Zwischen den Pollücken 2 ergeben sich jeweils magnetische Statorpole 4. Beide Wicklungen können auch invers parallel geschaltet sein, das heißt, der Wicklungsanfang der ersten Wicklung ist dann mit dem Wicklungsende der zweiten Wicklung verschaltet und umgekehrt.

Der Rotor ist Träger eines permanentmagnetischen Feldes, was in Fig. 1 schematisch durch Hufeisenmagnete 5 angedeutet ist. Die Hufeisenmagnete 5 haben eine am Umfang des Rotors wechselnde Feldrichtung, das heißt auf NS folgt SN usw. Zwischen den Permanentmagneten ergeben sich Rotorpole 6 mit abwechselnder Feldrichtung. Die Pollücken der Hufeisenmagnete 5 sind so ausgebildet, dass sich im Stator und Rotor gleich lange Pole gegenüberstehen. Gundvoraussetzung ist, dass der Abstand der Magnetpole den Pollücken bzw. der Länge der Wicklungsabschnitte 3 entspricht.

Die Wirkung der Wicklungen untereinander kann gezeigt werden, indem die Statorwicklungen kurzgeschlossen werden. Bei einem herkömmlichen Generator tritt bei einem Kurzschluss eine Bremswirkung ein. Im Falle des vorliegenden Generators tritt dagegen, wie Messungen an einer einfachen Mustermaschine ergeben haben, keinerlei Bremswirkung auf. Vielmehr sinkt die erforderliche Antriebsleistung unter die Leerlaufleistung.

Außerdem lässt sich folgende Wirkung nachweisen: Werden beide Stromkreise gleichzeitig, aber getrennt, also mit je einem eigenen Verbraucher betrieben, wie in Fig. 1 dargestellt, dann fließt nicht nur der doppelte Strom, wie zu erwarten wäre, sondern in jedem Stromkreis ein mehrfacher Wert. Außerdem steigt durch gegenseitige Induktion in den Wicklungen die induzierte Spannung.

Eine weitere vorteilhafte Wirkung bezüglich des Wirkungsgrades hat sich gezeigt, wenn mehrere Generatoren auf eine Antriebsachse angeordnet werden und die Wicklungen des ersten Generators einzeln jeweils mit den einzelnen Wicklungen des zweiten Generators in Reihe geschaltet werden.

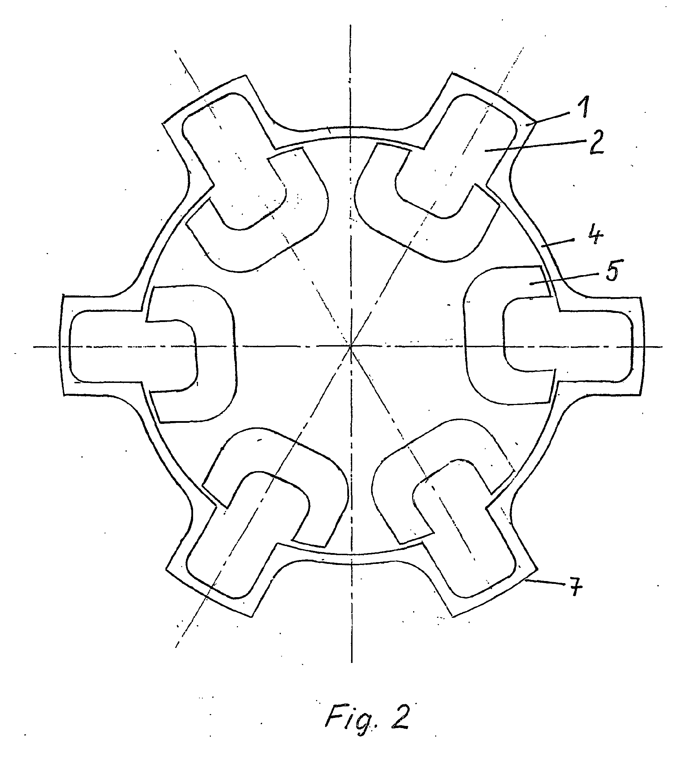

Fig. 2 zeigt eine Variante mit einem Statorring 1, dessen Querschnitt am gesamten Umfang nahezu gleich groß ist, indem die Statorpole 4 bei gleichbleibendem, einheitlichem Innendurchmesser verjüngt sind, so dass sich die zu bewickelnden Teile des Statorrings 1 als mäanderförmig nach außen vorspringende Bereiche 7 ergeben. Neben dem gleichbleibenden magnetisch wirksamen Querschnitt ergibt sich eine Einsparung an Statormaterial und somit ein weiter verbessertes Leistungs/Masse-Verhältnis. Selbstverständlich sind auch Lösungen denkbar, die hinsichtlich der Dicke des Statrorrings 2 im Bereich der magnetischen Pole 4 zwischen den beiden hier nur beispielhaft dargestellten Varianten liegen.

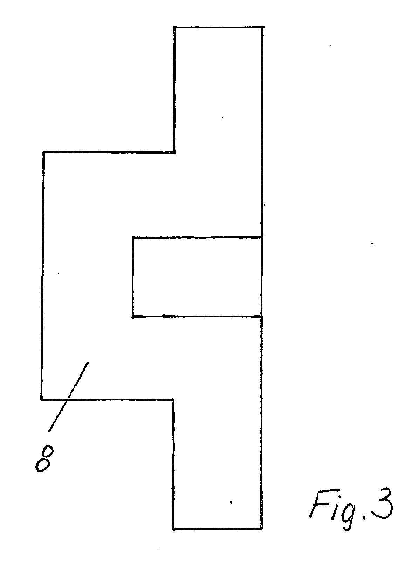

Fig. 3 zeigt einen erfindungsgemäßen Stator bei einer Maschine mit scheibenförmigem Rotor. In analoger Weise zur Anordnung gemäß Fig. 2 sind die mäanderförmigen Bereiche 8, hier in axialer Richtung, nach außen vorspringend gestaltet.

### Bezugszeichenliste

- 1: Statorring
- 2: Ausnehmung
- 3: Wicklungsabschnitt
- 4: Magnetischer Pol (des Stators)
- 5: Hufeisenmagnet
- 6: Rotorpol
- 7: (vorspringender) Bereich, mäanderförmige Bereiche
- 8: Rotorring

## Patentansprüche

1. Elektrische Maschine mit permanentmagnetischer Erregung, deren Stator aus einem Ringkern aus magnetisch leitfähigem Material besteht, der zwischen Abschnitten, die als magnetische Pole (4) wirken, in gleichmäßiger Verteilung Pollücken (2) und Wicklungsabschnitte (3) mit mindestens einer Wicklung mit in Umfangsrichtung des Stators liegender Wicklungsachse aufweist,
**dadurch gekennzeichnet, dass**
die Abstände zwischen den das Erregerfeld erzeugenden, entgegengesetzt gepolten Polen der Permanentmagnete (5) im wesentlichen der Größe der gegenüber liegenden Pollücken im Stator entsprechen und die Ausrichtung der magnetischen Pole der Permanentmagnete (5) in Umfangsrichtung im Rotor abwechselnd Nord-Nord und Süd-Süd ist.

2. Elektrische Maschine nach Anspruch 1,
**dadurch gekennzeichnet, dass**
die Pollücken (2) als in radialer Richtung mäanderförmig vorspringende Bereiche (7) ausgebildet sind, in die die Wicklungsabschnitte gewickelt sind.

3. Elektrische Maschine nach Anspruch 1 oder 2,
**dadurch gekennzeichnet, dass**
die Wicklung eine Mehrfachwicklung ist.

4. Elektrische Maschine nach Anspruch 3,
**dadurch gekennzeichnet, dass**
die Mehrfachwicklung aus einer geradzahligen Anzahl von Wicklungen mit am Umfang des Stators abwechselnd folgenden, miteinander in Reihe geschalteten Wicklungsabschnitten (3) besteht.

5. Elektrische Maschine nach Anspruch 4,
**dadurch gekennzeichnet, dass**
die Wicklungen antiparallel geschaltet sind.

6. Elektrische Maschine nach Anspruch 4,
**dadurch gekennzeichnet, dass**
die Wicklungen separat mit Verbrauchern beschaltet sind.

7. Elektrische Maschine nach einem der Ansprüche 3 bis 6,
**dadurch gekennzeichnet, dass**
die Mehrfachwicklung aus zwei separat mit Verbrauchern beschalteten Wicklungen mit am Umfang des Stators abwechselnd folgenden, miteinander in Reihe geschalteten Wicklungsabschnitten besteht.

8. Elektrische Maschine nach einem der Ansprüche 1 bis 7,
**dadurch gekennzeichnet, dass**
die Pollücken (2) bei einer Maschine mit'trommelförmigem Rotor vom Innenumfang des Stators ausgehen.

9. Elektrische Maschine nach einem der Ansprüche 1 bis 7,
**dadurch gekennzeichnet, dass**
die Pollücken (2) mit trommelförmigem Rotor vom Innen- und Außenumfang des Stators ausgehen.

10. Elektrische Maschine nach einem der Ansprüche 1 bis 7,
**dadurch gekennzeichnet, dass**
die Pollücken (2) bei einer Maschine mit scheibenförmigem Rotor von der Innenseite des Stators ausgehen.

11. Elektrische Maschine nach einem der Ansprüche 1 bis 7,
**dadurch gekennzeichnet, dass**
die Pollücken (2) bei einer Maschine mit scheibenförmigem Rotor von der Innen und Außenseite des Stators ausgehen.

12. Elektrische Maschine nach einem der vorhergehenden Ansprüche,
**dadurch gekennzeichnet, dass**
der Stator und/oder Rotor aus Weicheisen besteht.

13. Elektrische Maschine nach einem der Ansprüche 1 bis 11,
**dadurch gekennzeichnet, dass**
der Stator und/oder Rotor aus Ferrit besteht.

14. Elektrische Maschine nach einem der Ansprüche 1 bis 11,
**dadurch gekennzeichnet, dass**
der Stator und/oder Rotor geblecht ist.

15. Elektrische Maschine nach einem der vorhergehenden Ansprüche,
**dadurch gekennzeichnet, dass**
mehrere ihrer Art auf einer An- bzw. Abtriebswelle aneinander gereiht sind.

16. Elektrische Maschine nach Anspruch 15,
**dadurch gekennzeichnet, dass**
die Statoren der Maschinen von ihren Rotoren abziehbar schienenartig gelagert sind.

## Claims

1. Electric machine with permanent magnetic excitation, whose stator consists of a toroidal core made of a magnetically conductive material, the toroidal core having, between sections acting as magnetic poles (4), pole gaps (2) and winding sections (3) in a uniform distribution, the winding sections (3) comprising at least one winding having a winding axis situated in the peripheral direction of the stator,
**characterized in that**
the distances between the oppositely poled poles of the permanent magnets (5), which generate the excitation field, substantially correspond to the size of the opposite pole gaps in the stator, and **in that**, in the peripheral direction, the orientation of the magnetic poles of the permanent magnets (5) in the rotor alternates between north-north and south-south.

2. Electric machine according to claim 1,
**characterized in that**
the pole gaps (2) are formed as areas (7) projecting in a radial direction in a meandering manner, the winding sections being wound in those areas (7).

3. Electric machine according to claim 1 or 2,
**characterized in that**
the winding is a multiple winding.

4. Electric machine according to claim 3,
**characterized in that**
the multiple winding consists of an even number of windings, which have winding sections (3) arranged alternately one after the other at the periphery of the stator and connected in series to each other.

5. Electric machine according to claim 4,
**characterized in that**
the windings are connected in anti-parallel.

6. Electric machine according to claim 4,
**characterized in that**
the windings are separately wired with consumers.

7. Electric machine according to one of the claims 3 to 6,
**characterized in that**
the multiple winding consists of two windings wired separately with consumers, which have winding sections arranged alternately one after the other at the periphery of the stator and connected in series to each other.

8. Electric machine according to one of the claims 1 to 7,
**characterized in that,**
in a machine with a drum-shaped rotor, the pole gaps (2) extend from the inner periphery of the stator.

9. Electric machine according to one of the claims 1 to 7,
**characterized in that**
the pole gaps (2) with a drum-shaped rotor extend from the inner and outer periphery of the stator.

10. Electric machine according to one of the claims 1 to 7,
**characterized in that,**
in a machine with a disc-shaped rotor, the pole gaps (2) extend from the inside of the stator.

11. Electric machine according to one of the claims 1 to 7,
**characterized in that,**
in a machine with a disc-shaped rotor, the pole gaps (2) extend from the inside and the outside of the stator.

12. Electric machine according to one of the preceding claims,
**characterized in that**
the stator and/or rotor is made of soft iron.

13. Electric machine according to one of the claims 1 to 11,
**characterized in that**
the stator and/or rotor is made of ferrite.

14. Electric machine according to one of the claims 1 to 11,
**characterized in that**
the stator and/or rotor is laminated.

15. Electric machine according to one of the preceding claims,
**characterized in that**
several of its kind are lined up next to each other on an input shaft, respectively an output shaft.

16. Electric machine according to claim 15,
**characterized in that**
the stators of the machines are mounted in a rail-like manner so as to be removable from their rotors.

## Revendications

1. Machine électrique à excitation magnétique permanente dont le stator consiste en un noyau toroïdal réalisé en un matériau magnétiquement conducteur, le noyau toroïdal comportant, entre des sections agissant comme pôles magnétiques (4), des espaces interpolaires (2) et des sections d'enroulement (3) à répartition uniforme, les sections d'enroulement (3) ayant au moins un enroulement qui comporte un axe d'enroulement situé dans la direction périphérique du stator,
**caractérisée en ce que**
les distances entre les pôles des aimants permanents (5) à polarité opposée, qui génèrent le champ d'excitation, correspondent sensiblement à la dimension des espaces interpolaires opposés dans le stator, et **en ce que**, dans la direction périphérique, l'orientation des pôles magnétiques des aimants permanents (5) dans le rotor alterne entre nord-nord et sud-sud.

2. Machine électrique selon la revendication 1,
**caractérisée en ce que**
les espaces interpolaires (2) sont conçus comme des zones (7) faisant saillie, en forme de méandre, dans la direction radiale, les sections d'enroulement étant enroulées dans ces zones (7).

3. Machine électrique selon la revendication 1 ou 2,
**caractérisée en ce que**
l'enroulement est un enroulement multiple.

4. Machine électrique selon la revendication 3,
**caractérisée en ce que**
l'enroulement multiple consiste en un nombre pair d'enroulements ayant des sections d'enroulement (3) qui se succèdent alternativement sur la périphérie du stator et qui sont connectées en série les unes aux autres.

5. Machine électrique selon la revendication 4,
**caractérisée en ce que**
les enroulements sont connectés en anti-parallèle.

6. Machine électrique selon la revendication 4,
**caractérisée en ce que**
les enroulements sont connectés séparément à des consommateurs.

7. Machine électrique selon l'une des revendications 3 à 6,
**caractérisée en ce que**
l'enroulement multiple consiste en deux enroulements connectés séparément à des consommateurs et ayant des sections d'enroulement qui se succèdent alternativement sur la périphérie du stator et qui sont connectées en série les unes aux autres.

8. Machine électrique selon l'une des revendications 1 à 7,
**caractérisée en ce qu'**
en cas d'une machine au rotor en forme de tambour, les espaces interpolaires (2) s'étendent à partir de la périphérie intérieure du stator.

9. Machine électrique selon l'une des revendications 1 à 7,
**caractérisée en ce que**
les espaces interpolaires (2) au rotor en forme de tambour s'étendent à partir de la périphérie intérieure et extérieure du stator.

10. Machine électrique selon l'une des revendications 1 à 7,
**caractérisée en ce qu'**
en cas d'une machine au rotor en forme de disque, les espaces interpolaires (2) s'étendent à partir du côté intérieur du stator.

11. Machine électrique selon l'une des revendications 1 à 7,
**caractérisée en ce qu'**
en cas d'une machine au rotor en forme de disque, les espaces interpolaires (2) s'étendent à partir du côté intérieur et extérieur du stator.

12. Machine électrique selon l'une des revendications précédentes,
**caractérisée en ce que**
le stator et/ou le rotor est réalisé en fer doux.

13. Machine électrique selon l'une des revendications 1 à 11,
**caractérisée en ce que**
le stator et/ou le rotor est réalisé en ferrite.

14. Machine électrique selon l'une des revendications 1 à 11,
**caractérisée en ce que**
le stator et/ou le rotor est laminé en tôle.

15. Machine électrique selon l'une des revendications précédentes,
**caractérisée en ce que**
plusieurs machines de ce type sont alignées les unes à côté des autres sur une arbre d'entrée, respectivement de sortie.

16. Machine électrique selon la revendication 15,
**caractérisée en ce que**
les stators des machines sont montés sur des rails de manière à pouvoir être retirés de leurs rotors.
